# EUROPEAN PATENT SPECIFICATION

(11) **EP 1 956 293 B1**
(45) Date of publication and mention of the grant of the patent: **28.08.2019**
(21) Application number: 06833457.2
(22) Date of filing: 28.11.2006
(51) Int. Cl.: F23J 15/00, B01D 53/62, F23C 9/08, F23C 99/00, F23L 7/00, F25J 3/00

(54) **DISPOSAL METHOD AND EQUIPMENT FOR EXHAUST GAS FROM COMBUSTION SYSTEM**
VERFAHREN UND EINRICHTUNG ZUM ENTFERNEN VON ABGAS AUS EINEM VERBRENNUNGSSYSTEM
PROCÉDÉ D'ÉLIMINATION ET ÉQUIPEMENT POUR GAZ D ÉCHAPPEMENT PROVENANT D'UN SYSTÈME DE COMBUSTION

(30) Priority: 28.11.2005 JP 2005342355
(43) Date of publication of application: 13.08.2008
(73) Proprietor: ELECTRIC POWER DEVELOPMENT CO., LTD, Tokyo 104-8165 (JP); IHI Corporation, Tokyo 135-8710 (JP)
(72) Inventor: OOKAWA, Masafumi, Tokyo 104-8165 (JP); FUJIMORI, Toshiro, Koto-ku Tokyo 135-8710 (JP); TAKANO, Shinichi, Koto-ku ,Tokyo 135-8710 (JP); YAMADA, Toshihiko, Koto-ku Tokyo 135-8710 (JP)
(74) Representative: Köhler, Walter
(86) International application number: PCT/JP2006/323653
(87) International publication number: WO 2007/061107

(56) References cited:
- WO-A1-02/084177
- WO-A1-03/068368
- WO-A2-2004/042276
- JP-A- 04 244 504
- JP-A- 05 026 409
- JP-A- 05 026 428
- JP-A- 05 231 609
- JP-A- 06 293 888
- JP-A- 07 318 016
- JP-A- 11 147 023
- JP-A- 11 159 731
- US-A- 5 406 786
- HELLFRITSCH S ET AL: "CONCEPT FOR A LIGNITE-FIRED POWER PLANT BASED ON THE OPTIMISED OXYFUEL PROCESS WITH CO2 RECOVERY//EIN BRAUNKOHLEKRAFTWERKSKONZEPT NACH DEM OPTIMIERTEN OXYFUEL-PROZESS MIT CO2-ABSCHEIDUNG" VGB POWERTECH, VGB POWERTECH, ESSEN, DE, vol. 84, no. 8, 1 January 2004 (2004-01-01), pages 76-82, XP001200729 ISSN: 1435-3199

## Description

### Technical Field

The present invention relates to a method and an apparatus for disposing exhaust gas in a combustion equipment, and especially relates to a method and an apparatus for disposing exhaust gas in a combustion equipment which can effectively separate carbon dioxide from combustion exhaust gas to discharge the combustion exhaust gas having other exhaust gas components condensed through the separation of the carbon dioxide to the atmosphere.

### Background Art

Recently, global warming has been played up as environment-related issue on a mass global scale. It has been revealed that increase in concentration of carbon dioxide (CO₂) in the atmosphere is one of main causes of the global warming, and thermal power plants are attracting attention as fixed sources of discharging the matter. Used as fuel for thermal power generation is petroleum, natural gas or coal. Especially coal, which has great mineable reserves, is expected to have increasing demand in the future.

Coal has much carbon content in comparison with natural gas and petroleum and includes volatile portions such as hydrogen, nitrogen and sulfur and ash as inorganic matter, so that air combustion of coal brings about combustion exhaust gas substantially composed of nitrogen (about 70%) and including others such as carbon dioxide (CO₂), nitrogen oxides (NOₓ), sulfur oxides (SOₓ), steam, dust comprising ash and unburned coal particles and oxygen. Thus, the combustion exhaust gas is discharged through a stack to the atmosphere after exhaust gas treatment such as denitration, desulfurization and dust removal is conducted to make NOₓ, SOₓ and the fine particles in the combustion exhaust gas less than environmental emission standard.

NOₓ in combustion exhaust gas may be thermal NOₓ produced through oxidation of nitrogen in air by means of oxygen and fuel NOₓ produced through oxidation of nitrogen in fuel. Conventionally employed for decrease in production of thermal and fuel NOₓ are combustion with lowered flame temperature and combustion with a NOₓ-reductive excessive fuel region in a combustor, respectively.

In combustion of coal or sulfur-containing fuel, the combustion exhaust gas includes SOₓ which is removed by a dry- or wet-type desulfurization device.

Carbon dioxide produced in larger quantity in combustion exhaust gas is also desired to be removed with higher efficiency. Conventional approach for withdrawal of carbon dioxide in combustion exhaust gas is, for example, absorption into amine or other absorbing solution, adsorption to solid adsorbent or separation through membrane. However, any of them has lower efficiency and is not in practical use.

Then, combustion of fuel by means of oxygen in lieu of air has been proposed as effective technique for separation of carbon dioxide and suppression in production of thermal NOₓ in combustion exhaust gas (see, for example, Reference 1).

Oxygen combustion of coal produces no thermal NOₓ and brings about combustion exhaust gas substantially composed of carbon dioxide and including others such as fuel NOₓ, SOₓ and steam, which fact makes it relatively easy to cool the combustion exhaust gas for liquefaction and separation of carbon dioxide.

However, oxygen combustion involves a technical problem of higher flame temperature to be dealt with, for example, by improving heat resistance and lifespan of components of a combustion furnace. As shown in Reference 1, known as a countermeasure for the problem is exhaust gas recirculation by branching combustion exhaust gas from a combustion furnace after exhaust gas treatment and mixing the branched combustion exhaust gas with combustion gas such as oxygen or air to be fed to the combustion furnace.

Even in the technique shown in Reference 1, oxygen combustion during start-up of a combustion equipment would cause a combustion furnace to have higher temperature since carbon dioxide could not be recirculated. Thus, air combustion is conducted during start-up of the combustion furnace and, after stabilization of the combustion by the start-up oil or coal, is changed over into oxygen combustion with carbon dioxide being recirculated.
[Reference 1] Japanese Patent No. 3068888
[Reference 2] WO 2004/042276 A2
[Reference 3] JP H06 293888A

### Summary of the Invention

### Problems to be Solved by the Invention

According to the technique for the oxygen combustion disclosed in the above Reference 1, production of thermal NOₓ is suppressed to enhance the concentration of carbon dioxide, which makes it relatively easy to cool the combustion exhaust gas for separation of carbon dioxide. However, the combustion equipment cannot be worked well only by the technique disclosed in the above Reference 1.

More specifically, in Reference 1, the combustion exhaust gas treated by the exhaust gas processing means is guided to and cooled by a cooler for separation and storage of liquefied carbon dioxide. The combustion exhaust gas thus freed from the carbon dioxide is partly guided to a stack for discharge to the atmosphere, the remainder being compressed by a compressive oxygen blower for separation of liquefied oxygen, the liquefied carbon dioxide being utilized for recirculation, the liquefied oxygen being utilized for combustion.

However, the above Reference 1 has a problem that concentrations of NOₓ and SOₓ in the combustion exhaust gas guided to the stack may exceed environmental emission standard and become unsuitable for discharge to the atmosphere. More specifically, as mentioned in the above, when combustion exhaust gas with enhanced carbon dioxide concentration due to the oxygen combustion is cooled by the cooler for liquefaction and separation of the carbon dioxide, such separation of the carbon dioxide substantially constituting the combustion exhaust gas causes the other gas components such as NOₓ and SOₓ to be condensed. The combustion exhaust gas with such enhanced NOₓ and SOₓ concentrations may exceed environmental emission standard (nitrogen oxides emission standard in coal- and solid-fired boilers installed in April, 1987 or later in Japan: 250 ppm when converted in terms of oxygen with concentration of 6%) and therefore is unsuitable for discharge through the stack to the atmosphere. It is expected that the above-mentioned environmental emission standard for combustion exhaust gas may be further severely restricted worldwide, including Japan, from now on.

It may be conceivable to dilute with air the combustion exhaust gas guided to the stack. However, such dilution of the combustion exhaust gas with air cannot cope with the environmental emission standard since the emission standard of exhaust gas components is generally a restriction converted in terms of oxygen concentration.

Thus, for separation of carbon dioxide through oxygen combustion, it is required to enhance ability of exhaust gas processing means so as to enable the combustion exhaust gas to meet the environmental emission standard and to be discharged to the atmosphere even if NOₓ and SOₓ are condensed by the separation of carbon dioxide. This task is too hard to fulfill in the current status of art; thus, the above-mentioned separation of carbon dioxide through oxygen combustion is disadvantageously impracticable since the combustion exhaust gas is unsuitable for discharge to the atmosphere.

The invention was made in view of the above and has its object to provide a method and an apparatus for disposing exhaust gas in a combustion equipment which can effectively separate carbon dioxide from combustion exhaust gas and can discharge to the atmosphere the combustion exhaust gas having other exhaust gas components condensed through the separation of the carbon dioxide.

### Means or Measures for Solving the Problems

The invention is directed to a method for disposing exhaust gas in a combustion equipment according to claim 1.

In the method for disposing exhaust gas in the combustion equipment, it is preferable that the liquefied carbon dioxide is taken out by cooling and compressing the remaining unrecirculated combustion exhaust gas.

In the method for disposing exhaust gas in the combustion equipment, it is preferable that, during start-up of the combustion furnace, air is supplied to the combustion furnace for air combustion of the fuel, the combustion exhaust gas from the combustion furnace being treated with the exhaust gas processing means, the combustion exhaust gas being, at least after dust removal treatment, partly recirculated to said burner, the remaining unrecirculated combustion exhaust gas being discharged to the atmosphere.

In the method for disposing exhaust gas in the combustion equipment, it is preferable that the liquefied carbon dioxide taken out through the cooling and compression of said combustion exhaust gas is isolated and disposed.

In the method for disposing exhaust gas in the combustion equipment, it is preferable that said fuel is coal.

In the method for disposing exhaust gas in the combustion equipment, the other exhaust gas components after the taking-out of the liquefied carbon dioxide from said combustion exhaust gas include NOₓ and SOₓ.

The invention is directed to an apparatus for disposing exhaust gas according to claim 7.

cancelled

cancelled

### Effects of the Invention

A method and an apparatus for disposing exhaust gas in a combustion equipment according to the invention can exhibit excellent effects and advantages. Liquefied carbon dioxide can be effectively taken out from combustion exhaust gas due to oxygen combustion. With the simply constructed apparatus, the other exhaust gas components condensed in the separation of the liquefied carbon dioxide from the combustion exhaust gas can be easily and reliably discharged to the atmosphere through dilution with the other nitrogen-prevailing gas in separation of oxygen from air.

Since only the remaining unrecirculated combustion exhaust gas is compressed to take out the liquefied carbon dioxide, advantageously the apparatus can be simplified in construction and drive energy can be reduced in comparison with a system wherein all of combustion exhaust gas from a combustion furnace is cooled or compressed to take out liquefied carbon dioxide.

### Brief Description of the Drawings

Fig. 1 is a block diagram showing an embodiment of the apparatus for carrying out the invention; and
Fig. 2 is a block diagram showing an apparatus not according to the invention.

### Explanation of the Reference Numerals

- 1: coal (pulverized coal)
- 2: mill (fuel supply means)
- 4: combustion furnace
- 5a: burner
- 7: air
- 8: air separation unit
- 9: oxygen
- 10a: nitrogen-prevailing gas
- 14: recirculating means
- 15: recirculation gas
- 16: air preheater
- 18: air intake pipe (air supply means)
- 19: flue
- 20: dust collector (exhaust gas processing means)
- 21: denitration device (exhaust gas processing means)
- 22: desulfurization device (exhaust gas processing means)
- 23: exhaust gas processing means
- 25: stack
- 27: liquefying unit
- 29: liquefied carbon dioxide
- 31: other exhaust gas components
- 32: gas mixer
- 33: diluted exhaust gas
- 34: bypass duct
- 35a and 35b: selector means

### Best Mode for Carrying Out the Invention

Next, an embodiment of the invention will be described in conjunction with the attached drawings.

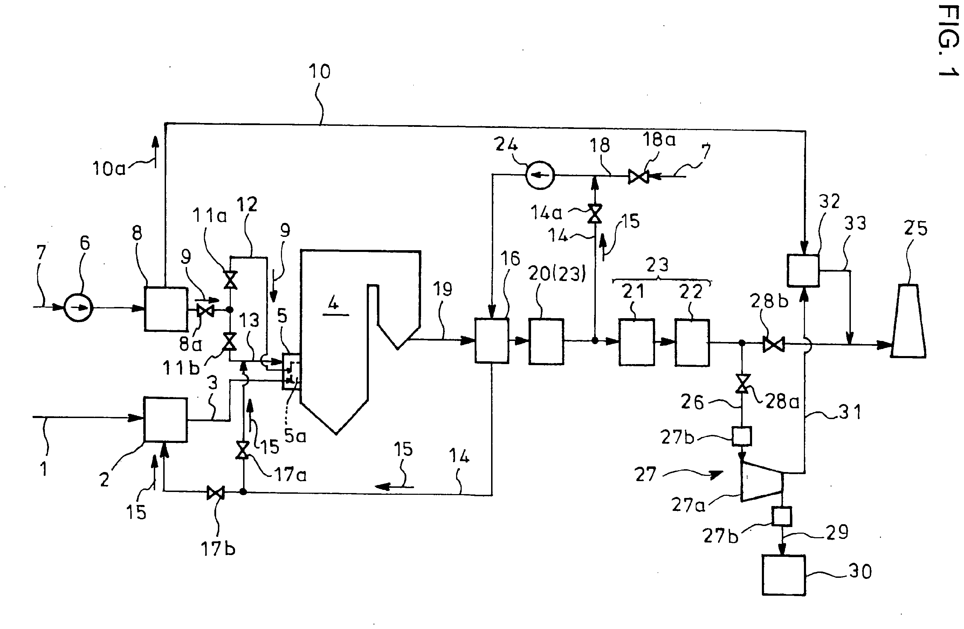

Fig. 1 is a block diagram showing an embodiment of an apparatus for carrying out the invention in which coal 1 as fuel is pulverized in a mill 2 as fuel supply means into pulverized coal 3 which is supplied to a burner 5a in a wind box 5 on a combustion furnace (boiler) 4. Air 7 from a blower 6 is supplied to an air separation unit 8 for separation of the air into oxygen 9 and other nitrogen-prevailing gas 10a, the resultant oxygen 9 being passed through a controller 8a and separated into direct and mixed supply lines 12 and 13 through oxygen flow rate controllers 11a and 11b, respectively, part of the oxygen 9 being directly supplied to the burner 5a, using the direct supply line 12. The remainder of the oxygen 9 is mixed in the mixed supply line 13 with part of recirculation gas 15 preheated in and guided from an air preheater 16, which will be detailed later, via recirculating means 14, the gas mixture being supplied as secondary combustion gas to the wind box 5 and thus to a secondary combustion gas supply port of the burner 5a. The remainder of the recirculation gas 15 is supplied to the mill 2 for dryness of the coal and as primary combustion gas conveying the pulverized coal 3 to a primary combustion gas supply port of the burner 5a. The flow rate of the recirculation gas 15 mixed in the mixed supply line 13 and the flow rate of the recirculation gas 15 guided to the mill 2 are controlled by flow rate controllers 17a and 17b, respectively.

The pulverized coal 3 and the oxygen 9 as oxidant are burned in the combustion furnace 4 where almost all of carbon content in the coal is converted into carbon dioxide, provided that the primary and secondary combustion gases are supplied with total air ratio of more than 1. The coal includes volatile portions such as hydrogen, nitrogen and sulfur, these volatile portions being oxidized by oxygen in the combustion gas to produce acid gases such as NOₓ and SOₓ.

The combustion exhaust gas including the carbon dioxide, the acid gases such as NOₓ and SOₓ and powder dust is guided via a flue 19 to the air preheater 16 and then to a dust collector 20 as exhaust gas processing means 23 for removal of dust, a denitration device 21 for removal of NOₓ and a desulfurization device 22 for removal of SOₓ. Connected to the flue 19 at an outlet of the dust collector 20 is the recirculating means 14 thorough which part of the combustion exhaust gas freed from dust in the dust collector 20 is taken out and supplied to the air preheater 16 via a blower 24, whereby part of the combustion exhaust gas at the outlet of the dust collector 20 is recirculated as recirculation gas 15 by the recirculating means 14 to the burner 5a through the mill 2 and the mixed supply line 13. The combustion exhaust gas due to the combustion in the combustion furnace 4 has the carbon dioxide with enhanced concentration whereas the carbon dioxide in the recirculation gas 15 undergoes reduction effect by the combustion in the combustion furnace 4, the concentration of carbon dioxide in the combustion exhaust gas taken out from the combustion furnace 4 being kept to constant higher level.

Connected to the recirculating means 14 at an inlet of the blower 24 is air intake pipe 18 for intake of air 7. By changeover of selectors 14a and 18a, the recirculation gas 15 from the flue 19 and the air 7 from the air intake pipe 18 (air supply means) are selectively fed to the blower 24. Specifically, the selectors 14a and 18a are changed over such that, by the recirculating means 14, the combustion furnace 4 is fed with the recirculation gas 15 during steady operation of the combustion furnace 4 and with the air 7 during start-up of the combustion furnace 4.

The remainder of the combustion exhaust gas not recirculated to the recirculating means 14 is guided by the flue 19 to a stack 25. Upstream of the stack 25, the flue 19 is branched by a branching duct 26 to a liquefying unit 27, so that the combustion exhaust gas is selectively guided to the stack 25 and the liquefying unit 27 by changeover of the selectors 28a and 28b.

The combustion exhaust gas supplied to the liquefying unit 27 is cooled and compressed by a compressor 27a and at least a cooler 27b arranged upstream and/or downstream of the compressor 27a for separation of liquefied carbon dioxide 29, the taken-out liquefied carbon dioxide 29 being stored in a storage container 30. In the liquefying unit 27, the combustion exhaust gas may be cooled and compressed into, for example, 0°C and 7 MPa for taking-out of the liquefied carbon dioxide 29. From the liquefying unit 27, carbon dioxide compressed and not liquefied may be also taken out.

The other exhaust gas components 31 such as NOₓ and SOₓ not liquefied by compression in the liquefying unit 27 are taken out from the liquefying unit 27 to a gas mixer 32. To the gas mixer 32, the nitrogen-prevailing gas 10a remaining in the separation of the oxygen from the air in the air separation unit 8 has been supplied through a nitrogen gas pipe 10. Thus, the other exhaust gas components 31 are diluted in the gas mixer 32 with the nitrogen-prevailing gas 10a, diluted exhaust gas 33 in the mixer 32 being guided through the flue 19 to the stack 25.

Next, mode of operation of the above embodiment will be described.

During start-up of the combustion equipment in Fig. 1, with the selectors 18a and 14a being opened and completely closed, respectively, the air 7 is supplied as combustion gas to the burner 5a for ordinary air combustion by driving the blower 24. This is conducted with the controller 8a at the outlet of the air separation unit 8 being closed not to supply the oxygen 9 to the combustion furnace 4, the selectors 28a and 28b being closed and opened, respectively, so as to guide all of the combustion exhaust gas from the exhaust gas processing means 23 to the stack 25. In the air combustion, the resultant combustion exhaust gas consists of about 70% of nitrogen, the remainders being carbon dioxide, SOₓ, steam and the like. With the respective components being kept lower than environmental emission standard through exhaust gas treatment by the dust collector 20, denitration device 21 and desulfurization ndevice 22 of the exhaust gas processing means 23, the combustion exhaust gas is discharged through the stack 25 to the atmosphere.

When absorbed heat by the combustion furnace (boiler) 4 reaches a predetermined value, then the selector 18a is totally closed while the selector 14a is opened. Thus, part of the combustion exhaust gas treated by at least the dust collector 20 of the exhaust gas processing means 23 is recirculated as recirculation gas 15 via the recirculating means 14 to the mill 2 and mixed supply line 13 by the blower 24. In this case, the flow rate of the recirculation gas 15 mixed to the mixed supply line 13 and the flow rate of the recirculation gas 15 guided to the mill 2 are controlled by the flow rate controllers 17a and 17b, respectively.

Concurrently, by opening the controller 8a, the oxygen 9 from the preliminarily actuated blower 6 and air separation unit 8 is mixed with the recirculation gas 15 by the mixed supply line 13 to supply the mixture to the wind box 5 and is directly supplied to the burner 5a by the direct supply line 12 for combustion. In this case, the flow rates of the oxygen 9 guided to the direct supply line 12 and to the mixed supply line 13 are controlled by the oxygen flow rate controllers 11a and 11b, respectively. As mentioned in the above, with the oxygen 9 being supplied, the supply of the nitrogen contained in the air as combustion gas is stopped so that the concentration of nitrogen in the combustion exhaust gas from the combustion furnace 4 is gradually decreased. After nitrogen does not remain in the combustion exhaust gas, the selectors 28b and 28a are closed and opened, respectively, to guide the combustion exhaust gas from the exhaust gas processing means 23 to the liquefying unit 27 through the branching duct 26. Thus, the steady operation is started.

The combustion exhaust gas supplied to the liquefying unit 27 by the branching duct 26 is cooled and compressed into, for example, 0°C and 7 MPa by the cooler 27b and the compressor 27a, whereby the carbon dioxide is liquefied into liquefied carbon dioxide 29 and taken out to the storage container 30.

On the other hand, the other exhaust gas components 31 such as NOₓ and SOₓ not liquefied by the compression by means of the liquefying unit 27 are taken out from the liquefying unit 27 to the gas mixer 32 where they are mixed with the nitrogen-prevailing gas 10a remaining in the separation of the oxygen from the air in the air separation unit 8. Thus, the other exhaust gas components 31 are guided as diluted exhaust gas 33 diluted with the nitrogen-prevailing gas 10a to the stack 25.

In this case, as mentioned in the above, the combustion exhaust gas with enhanced concentration of carbon dioxide due to the oxygen combustion is compressed in the liquefying unit 27 for separation of the liquefied carbon dioxide. Then, with the carbon dioxide substantially composing the combustion exhaust gas being separated, the other exhaust gas components 31 or NOₓ and SOₓ are condensed into enhanced concentration; however, the resultant large volume of nitrogen-prevailing gas 10a is, after the separation of about 21% of oxygen 9 in the air in the air separation unit 8, mixed and diluted with the other exhaust gas components 31, so that it can be discharged via the stack 25 to the atmosphere as diluted gas reliably meeting environmental emission standard.

The liquefied carbon dioxide 29 taken out to the storage container 30 is directly transported to and isolated and disposed, for example, in an undersea or underground reservoir kept to lower temperature.

In the liquefying unit 27, only the remaining combustion exhaust gas not recirculated by the recirculating means 14 is compressed to take out the liquefied carbon dioxide 29. Thus, the apparatus can be simplified in construction and the drive energy can be reduced in comparison with a system wherein all of combustion exhaust gas from the combustion furnace 4 is cooled and compressed for taking-out of liquefied carbon dioxide.

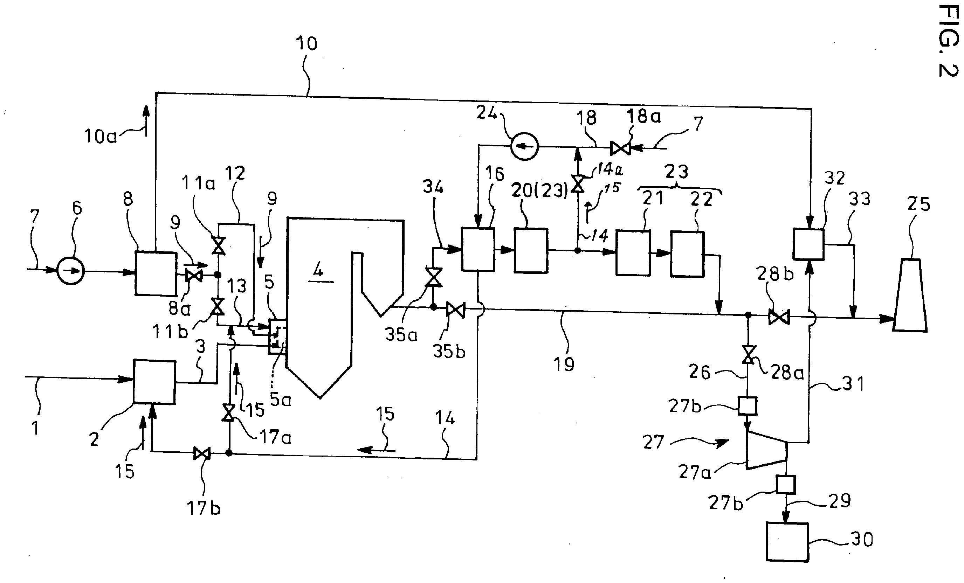

Fig. 2 shows an apparatus wherein a flue 19 for guidance of combustion exhaust gas from a combustion furnace 4 to a stack 25 is connected with a bypass duct 34, exhaust gas processing means 23 and an air preheater 16 being arranged not in the flue 19 but in the bypass duct 34, selector means 35a and 35b being provided for causing the combustion exhaust gas from the combustion furnace 4 to selectively flow to the flue 19 and to the bypass duct 34.

In the construction of Fig. 2, during start-up of the combustion equipment with air combustion being conducted in the combustion furnace 4, an operation similar to the start-up operation in the above-mentioned embodiment is conducted with the selector means 35a and 35b being opened and completely closed, respectively, so that all of the combustion exhaust gas from the combustion furnace 4 is caused to flow through the bypass duct 34. Thus, the combustion exhaust gas is guided to and discharged via the stack 25 to the atmosphere after exhaust gas treatment by the exhaust gas processing means 23 is conduced in the bypass duct 34.

During steady operation of the combustion equipment with oxygen combustion being conducted in the combustion furnace 4, the operation similar to the steady operation in the above embodiment is conducted with the selector means 35b and 35a being opened and totally closed, respectively, so that all of the combustion exhaust gas from the combustion furnace 4 is caused to flow through the flue 19. In this case, part of the combustion gas is recirculated as recirculation gas 15 by the recirculating means 14 to the combustion furnace 4 via the air preheater 16, the remaining combustion exhaust gas not recirculated being supplied via the branching duct 26 to the liquefying unit 27 for separation of the liquefied carbon dioxide 29. The other exhaust gas components 31 such as NOₓ and SOₓ not liquefied by the compression by means of the liquefying unit 27 are guided to the gas mixer 32 where they are mixed with the nitrogen-prevailing gas 10a remaining in the separation of the oxygen from the air in the air separation unit 8, the resultant diluted exhaust gas 33 being guided to and discharged through the stack 25 to the atmosphere.

In the apparatus not according to the invention of Fig. 2, the exhaust gas processing means 23 arranged in the bypass duct 34 is used only during the start-up of the combustion equipment, so that the construction of the exhaust gas processing means 23 can be simplified and can be of small-sized. Moreover, during the steady operation, the combustion exhaust gas from the combustion furnace 4 is guided, without being passed through the exhaust gas processing means 23, directly to the liquefying unit 27 to take out the liquefied carbon dioxide 29, and the other remaining exhaust gas components 31 freed from the liquefied carbon dioxide 29 in the liquefying unit 27 can be discharged via the stack 25 to the atmosphere after dilution in the gas mixer 32 with a sufficient volume of nitrogen-prevailing gas 10a. Since the combustion exhaust gas does not pass through the exhaust gas processing means 23, the task of reducing pressure loss can be attained and the exhaust gas processing means 23 can be prolonged in service life.

According to the invention, attainable by a simple construction of arranging an air separation unit 8, a liquefying unit 27 and a gas mixer 32 to an existing combustion equipment comprising a combustion furnace 4, exhaust gas processing means 23 and recirculating means 14 for combustion exhaust gas are effective taking-out of liquefied carbon dioxide from combustion exhaust gas due to oxygen combustion and reliable discharge to a stack 35 of the other exhaust gas components 31 in separation of liquefied carbon dioxide 29.

## Claims

1. A method for disposing exhaust gas in a combustion equipment wherein air (7) is separated by an air separation unit (8) into oxygen (9) and other nitrogen-prevailing gas (10a), the oxygen (9) obtained in the air separation unit (8) and fuel being burned by a burner (5a) of a combustion furnace (4), combustion exhaust gas from the combustion furnace (4) being, at least after dust removal treatment, partly recirculated as recirculation gas (15) to a boiler body, the unrecirculated remainder of the combustion exhaust gas being discharged to the atmosphere, said method comprising compressing said unrecirculated remainder of the combustion exhaust gas taken out downstream of exhaust gas processing means (20, 21, 22, 23) so as to take out liquefied carbon dioxide (29), mixing and diluting other exhaust gas components (31), which are taken out without liquefaction, through the compression to have enhanced concentration, with the other nitrogen-prevailing gas (10a) produced in the separation of the oxygen (9) from the air (7) in the air separation unit (8), and discharging the mixed and diluted gas to the atmosphere.

2. A method for disposing exhaust gas in a combustion equipment as claimed in claim 1, wherein the liquefied carbon dioxide (29) is taken out by cooling and compressing the unrecirculated remainder of the combustion exhaust gas.

3. A method for disposing exhaust gas in a combustion equipment as claimed in claim 1, wherein during start-up of said combustion furnace (4), air (7) is supplied to the combustion furnace (4) for air combustion of the fuel, the combustion exhaust gas from the combustion furnace (4) being treated with the exhaust gas processing means (20, 21, 22, 23), the combustion exhaust gas being, at least after dust removal treatment, partly recirculated to said burner (5a), the unrecirculated remainder of the combustion exhaust gas being discharged to the atmosphere.

4. A method for disposing exhaust gas in a combustion equipment as claimed in claim 1, wherein the liquefied carbon dioxide (29) taken out through the cooling and compression of said combustion exhaust gas is isolated and disposed.

5. A method for disposing exhaust gas in a combustion equipment as claimed in claim 1, wherein said fuel is coal (1).

6. A method for disposing exhaust gas in a combustion equipment as claimed in claim 1, wherein the other exhaust gas components (31) after the taking-out of the liquefied carbon dioxide (29) from said combustion exhaust gas include NOₓ and SOₓ.

7. An apparatus for disposing exhaust gas, the apparatus comprising combustion equipment having fuel supply means (2), an air separation unit (8) for separating air (7) into oxygen (9) and nitrogen-prevailing gas (10a), air supply means (18), a combustion furnace (4) for receiving fuel from said fuel supply means (2) and the oxygen (9) from said air separation unit (8) or air (7) from said air supply means (18) for combustion with a burner (5a), a flue (19) for guiding the combustion exhaust gas in said combustion furnace (4) to outside of said combustion furnace (4), exhaust gas processing means (20, 21, 22, 23) in said flue (19), recirculating means (14) for recirculating part of the combustion exhaust gas to said burner (5a) to enhance concentration of carbon dioxide in the combustion exhaust gas at least after dust removal treatment by said exhaust gas processing means (20, 21, 22, 23), and a stack (25) for discharging the unrecirculated remainder of the combustion exhaust gas through said recirculating means (14) to the atmosphere, said apparatus comprising a liquefying unit (27) for receiving said unrecirculated remainder of the combustion exhaust gas downstream of the exhaust gas processing means (20, 21, 22, 23) to cool and compress the same for taking-out of liquefied carbon dioxide (29), and a gas mixer (32) for mixing other exhaust gas components (31), which are taken out without liquefaction through the cooling and compression in said liquefying unit (27) to have enhanced concentration, with the nitrogen-prevailing gas (10a) remaining in the separation of the oxygen (9) from the air (7) in said air separation unit (8) to guide the same as diluted exhaust gas (33) to said stack (25).

## Patentansprüche

1. Verfahren zum Entsorgen von Abgas in einer Verbrennungsanlage, wobei Luft (7) durch eine Lufttrenneinheit (8) in Sauerstoff (9) und in ein anderes vorwiegend Stickstoff enthaltendes Gas (10a) getrennt wird, wobei der Sauerstoff (9), der in der Lufttrenneinheit (8) erhalten wird, und Brennstoff durch einen Brenner (5a) eines Verbrennungsofens (4) verbrannt werden, wobei Verbrennungsabgas von dem Verbrennungsofen (4) wenigstens nach einer Staubentfernungsbehandlung teilweise als Rückführungsgas (15) zu einem Kesselkörper rückgeführt wird, wobei der nicht rückgeführte Rest des Verbrennungsabgases an die Atmosphäre abgegeben wird, wobei das Verfahren das Folgendes umfasst: Komprimieren des nicht rückgeführten Rests des Verbrennungsabgases, der stromabwärts von Abgasbehandlungsmitteln (20, 21, 22, 23) entnommen wird, um verflüssigtes Kohlenstoffdioxid (29) zu entnehmen, Mischen und Verdünnen anderer Abgaskomponenten (31), die ohne Verflüssigung durch Kompression, um eine erhöhte Konzentration zu erhalten, entnommen werden, mit dem anderen vorwiegend Stickstoff enthaltenden Gas (7a), das bei der Trennung des Sauerstoffs (9) von der Luft (7) in der Lufttrenneinheit (8) erzeugt wird, und Abgeben des vermischten und verdünnten Gases an die Atmosphäre.

2. Verfahren zum Entsorgen von Abgas in einer Verbrennungsanlage nach Anspruch 1, wobei das verflüssigte Kohlenstoffdioxid (29) durch Kühlen und Komprimieren des nicht rückgeführten Rests des Verbrennungsabgases entnommen wird.

3. Verfahren zum Entsorgen von Abgas in einer Verbrennungsanlage nach Anspruch 1, wobei während des Hochfahrens des Verbrennungsofens (4) dem Verbrennungsofen (4) Luft (7) für eine Luftverbrennung des Brennstoffs zugeführt wird, wobei das Verbrennungsabgas vom Verbrennungsofen (4) mit den Abgasbehandlungsmitteln (20, 21, 22, 23) behandelt wird, wobei das Verbrennungsabgas wenigstens nach einer Staubentfernungsbehandlung teilweise zu dem Brenner (5a) rückgeführt wird, wobei der nicht rückgeführte Rest des Verbrennungsabgases an die Atmosphäre abgegeben wird.

4. Verfahren zum Entsorgen von Abgas in einer Verbrennungsanlage nach Anspruch 1, wobei das verflüssigte Kohlenstoffdioxid (29), das durch Kühlen und Komprimieren des Verbrennungsabgases entnommen wird, isoliert und entsorgt wird.

5. Verfahren zum Entsorgen von Abgas in einer Verbrennungsanlage nach Anspruch 1, wobei der Brennstoff Kohle ist.

6. Verfahren zum Entsorgen von Abgas in einer Verbrennungsanlage nach Anspruch 1, wobei die anderen Abgaskomponenten (31) nach der Entnahme des verflüssigten Kohlenstoffdioxids (29) aus dem Verbrennungsabgas NOₓ und SOₓ enthalten.

7. Vorrichtung zum Entsorgen von Abgas, wobei die Vorrichtung eine Verbrennungsanlage mit Brennstoffzufuhrmitteln (2), einer Lufttrenneinheit (8) zum Trennen von Luft (7) in Sauerstoff und ein vorwiegend Stickstoff enthaltendes Gas (10a), Luftzufuhrmittel (18), einen Verbrennungsofen (4) zum Empfangen von Brennstoff von den Brennstoffzufuhrmitteln (2) und von Sauerstoff (9) von der Lufttrenneinheit (8) oder von Luft (7) von den Luftzufuhrmitteln (18) für eine Verbrennung mit einem Brenner (5a), einen Abzug (19) zum Führen des Verbrennungsabgases in dem Verbrennungsofen (4) zur äußeren Umgebung des Verbrennungsofens (4), Abgasbehandlungsmittel (20, 21, 22, 23) in dem Abzug (19), Rückführungsmittel (14) zum Rückführen eines Teils des Verbrennungsabgases zu dem Brenner (5a), um die Konzentration von Kohlenstoffdioxid in dem Verbrennungsabgas wenigstens nach einer Staubentfernungsbehandlung durch die Abgasbehandlungsmittel (20, 21, 22, 23) zu erhöhen, und einen Schornstein (25) zum Abgeben des nicht durch die Rückführungsmittel (14) rückgeführten Rests des Verbrennungsabgases an die Atmosphäre umfasst, wobei die Vorrichtung eine Verflüssigungseinheit (27), um den nicht rückgeführten Rest des Verbrennungsabgases stromabwärts der Abgasbehandlungsmittel (20, 21, 22, 23) zu empfangen, um ihn zu kühlen und zu komprimieren, um ihn aus dem verflüssigten Kohlenstoffdioxid (29) zu entnehmen, und einen Gasmischer (32) zum Mischen anderer Abgaskomponenten (31), die ohne Verflüssigung durch Kühlung und Kompression in der Verflüssigungseinheit (27) entnommen werden, um die Konzentration zu erhöhen, mit dem vorwiegend Stickstoff enthaltenden Gas (10a), das bei der Trennung des Sauerstoffs (9) von der Luft (7) in der Lufttrenneinheit (8) zurückbleibt, um es als verdünntes Abgas (33) zu dem Schornstein (25) zu führen, umfasst.

## Revendications

1. Une méthode d'évacuation d'un gaz d'échappement dans un équipement de combustion, dans laquelle l'air (7) est séparé par une unité de séparation d'air (8) en oxygène (9) et en un autre gaz contenant principalement de l'azote (10a), l'oxygène (9) obtenu dans l'unité de séparation d'air (8) et le carburant étant brûlés par un brûleur (5a) d'un four de combustion (4), le gaz d'échappement de combustion provenant du four de combustion (4) étant, au moins après un traitement d'élimination des poussières, partiellement remis en circulation en tant que gaz de recirculation (15) vers un corps de chaudière, le reste non remis en circulation du gaz d'échappement de combustion étant évacué vers l'atmosphère, ladite méthode comprenant la compression dudit reste non remis en circulation du gaz d'échappement de combustion extrait en aval de moyens de traitement du gaz d'échappement (20, 21, 22, 23) de façon à extraire du dioxyde de carbone liquéfié (29), le mélange et la dilution d'autres composants du gaz d'échappement (31), qui sont extraits sans liquéfaction, grâce à la compression afin d'obtenir une concentration augmentée, l'autre gaz contenant principale de l'azote (10a) étant produit lors de la séparation de l'oxygène (9) de l'air (7) dans l'unité de séparation d'air (8), et l'évacuation du gaz mélangé et dilué vers l'atmosphère.

2. Une méthode d'évacuation d'un gaz d'échappement dans un équipement de combustion selon la revendication 1, dans laquelle le dioxyde de carbone liquéfié (29) est extrait par refroidissement et compression du reste non remis en circulation du gaz d'échappement de combustion.

3. Une méthode d'évacuation d'un gaz d'échappement dans un équipement de combustion selon la revendication 1, dans laquelle, pendant le démarrage dudit four de combustion (4), l'air (7) est introduit dans le four de combustion (4) pour la combustion de l'air du carburant, le gaz d'échappement de combustion provenant du four de combustion (4) étant traité avec les moyens de traitement du gaz d'échappement (20, 21, 22, 23), le gaz d'échappement de combustion étant, au moins après un traitement d'élimination des poussières, partiellement remis en circulation vers ledit brûleur (5a), le reste non remis en circulation étant évacué vers l'atmosphère.

4. Une méthode d'évacuation d'un gaz d'échappement dans un équipement de combustion selon la revendication 1, dans laquelle le dioxyde de carbone liquéfié (29) extrait grâce au refroidissement et à la compression dudit gaz d'échappement de combustion est isolé et évacué.

5. Une méthode d'évacuation d'un gaz d'échappement dans un équipement de combustion selon la revendication 1, dans laquelle ledit carburant est du charbon (1).

6. Une méthode d'évacuation d'un gaz d'échappement dans un équipement de combustion selon la revendication 1, dans laquelle les autres composants du gaz d'échappement (31), après l'extraction du dioxyde de carbone liquéfié (29) dudit gaz d'échappement de combustion, comprennent du NOx et du SOx.

7. Un appareil d'évacuation d'un gaz d'échappement, cet appareil comprenant un équipement de combustion comprenant un moyen d'alimentation en carburant (2), une unité de séparation d'air (8) pour séparer l'air (7) en oxygène (9) et en un gaz contenant principalement de l'azote (10a), un moyen d'alimentation en air (18), un four de combustion (4) pour recevoir un carburant en provenance dudit moyen d'alimentation en carburant (2) et l'oxygène (9) provenant de ladite unité de séparation d'air (8) ou l'air (7) provenant dudit moyen d'alimentation en air (18) pour la combustion avec un brûleur (5a), un conduit (19) pour le guidage du gaz d'échappement de combustion dans ledit four de combustion (4) vers l'extérieur dudit four de combustion, des moyens de traitement du gaz d'échappement (20, 21, 22, 23) dans ledit conduit (19), un moyen de recirculation (14) la remise en circulation d'une partie du gaz d'échappement de combustion vers ledit brûleur (5a) afin d'augmenter la concentration en dioxyde de carbone du gaz d'échappement de combustion au moins après un traitement d'élimination des poussières par lesdites moyens de traitement du gaz d'échappement (20, 21, 22, 23), et une cheminée (25) pour l'évacuation du reste non remis en circulation du gaz d'échappement de combustion à travers ledit moyen de recirculation (14) vers l'atmosphère, ledit appareil comprenant une unité de liquéfaction (27) pour recevoir ledit reste non remis en circulation du gaz d'échappement de combustion en aval des moyens de traitement du gaz d'échappement (20, 21, 22, 23) pour refroidir et compresser celui-ci pour l'extraction de dioxyde de carbone liquéfié (29), et un mélangeur de gaz (32) pour le mélange d'autres composants du gaz d'échappement (31), qui sont extraits sans liquéfaction grâce au refroidissement et à la compression dans ladite unité de liquéfaction (27) afin d'obtenir une concentration augmentée, le gaz contenant principalement de l'azote (10a) restant lors de la séparation de l'oxygène (9) de l'air (7) dans ladite unité de séparation d'air (8) afin de guider celui-ci en tant que gaz d'échappement dilué (33) vers ladite cheminée (25).
